# EUROPÄISCHE PATENTSCHRIFT

(11) **EP 0 379 610 B1**
(45) Veröffentlichungstag und Bekanntmachung des Hinweises auf die Patenterteilung: **07.04.1993**
(21) Anmeldenummer: 89101191.8
(22) Anmeldetag: 24.01.1989
(51) Int. Cl.: B64D 17/02

(54) **Nichtstarrer Mehrfach-Tragflügel für Gleitschirme, Autos, Motorräder, Motorboote und andere bisher bodengebundene Verkehrsmittel**
Multiple flexible wing for gliding chutes, motor cars, motor cycles, motor boats and other transport means
Aile souple en plusieurs parties pour parachute planeur, autos, motos, bateaux à moteur et autres moyens de transport

(43) Veröffentlichungstag der Anmeldung: 01.08.1990
(73) Patentinhaber: Duschl, Reinhard, Dipl.-Ing. (FH), D-82031 Grünwald (DE)
(72) Erfinder: Duschl, Reinhard, Dipl.-Ing. (FH), D-82031 Grünwald (DE)

(56) Entgegenhaltungen:
- FR-A- 553 452
- FR-A- 802 292
- GB-A- 596 367
- US-A- 4 634 080
- US-A- 4 637 576

## Beschreibung

### Technisches Gebiet

Die Erfindung bezieht sich auf die Bauart von Tragflügeln aus flexiblem Material, wie sie z.B. für Gleitschirme Verwendung finden; dabei sind mehrere Einzeltragflügel zu einer Einheit verbunden und in ihrer gegenseitigen Lage mit Leinen fixiert.

### Bekannte Stand der Technik

Nichtstarre Tragflügel aus Stoff ermöglichen es, mit geringem Aufwand den alten Traum der Menschheit vom freien Flug zu verwirklichen.

Bekannt geworden ist die Erfindung der sogenannten Parafoils von Domina Jalbert aus dem Jahre 1964 durch das Gleitschirmfliegen.

Die bisher für Gleitschirme bekannten Tragflügel bestehen aus einer nichtstarren Tragfläche, deren Formstabilität durch den Staudruck der anströmenden Luft gewährleistet wird.

Ober- und Unterteil des Tragflügels sind dabei durch in profilform zugeschnittene Wände miteinander verbunden. Erst durch sie erhält die Gleitschirmkappe das typische Tragflächenprofil.

Die Kappe besteht aus mehreren Zellen, die wiederum in Kammern unterteilt sind. Alle die Zellen begrenzende Wände sind tragend. Sie heißen Zellwände. Die dazwischen liegenden Wände werden Zellzwischenwände genannt. Beide sind mit Druckausgleichsöffnungen (Überströmlöcher) versehen, die in der gesamten Tragfläche für gleichen Innendruck sorgen.

In Turbulenzen eingefallene Endzellen können so durch querströmende Stauluft von innen wieder aufgedrückt werden.

Links und rechts am Tragflügel befinden sich Stabilisatoren. Sie geben dem Gleitschirm Richtungsstabilität und reduzieren den induzierten Widerstand. Zur Verteilung der aufgehängten Last auf die Gleitschirmkappe dienen Fangleinen und Tragegurte.

Erstere sind, geordnet in mehrere Querreihen, an den tragenden Zellwänden befestigt und münden am anderen Ende in den Tragegurt; der Verbindung zum aufgehängten Objekt.

Durch eine nach hinten zunehmende Länge der Fangleinen wird eine Anstellung des Tragflügels gegenüber der Horizontalen erreicht.

Gesteuert wird über Steuerleinen, die zur rechten und linken Hinterkante des Gleitschirms führen, wobei sie in mehrere Steuernebenleinen verzweigen.

### Kritische Betrachtung und Aufgabenstellung

In der noch jungen Geschichte der Gleitschirmfliegerei konnte die Leistung dieser Fluggeräte durch konstruktive Maßnahmen bereits gesteigert werden.

Bei diesem Streben nach mehr Leistung und besseren Gleitwinkeln wurde versucht, dieses Ziel auf folgenden Wegen zu erreichen:
- Vergrößerung der Spannweite
- Vergrößerung der Flügelstreckung
- Teilweise geschlossene Anströmkante
- Begradigung der Anströmkante
- Verlegung der Eintrittsöffnungen nach unten
- Trapez- und elliptische Tragflächenform

Bis heute erzielte man jedoch nur einen Teilerfolg. Durchsetzten konnten sich nur die beiden zuletzt genannten Verbesserungen.

Die zur Leistungssteigerung wirksamsten konstruktiven Maßnahmen wären ohne Zweifel die Vergrößerung der Spannweite und der Flügelstreckung.

Leider beeinträchtigen diese Veränderungen, ab einem bestimmten Maß, die Flugsicherheit derart, daß diesem Tun enge Grenzen gesetzt, und nur in einem gewissen Grad durchführbar sind.

Die enorme Spannweite und die hohe Streckung moderner Geräte haben bereits einen nicht zu unterschätzenden Einfluß auf die Stabilität der Kalotte im Flug - besonders im Flug durch unruhige Luft.

Aufgrund der großen Spannweite kann es sein, daß sich rechtes und linkes Flügelende in gegensätzlichen Luftströmungen befinden, wodurch es zu enormen Verwindungen am Flügel kommen kann. Die Folge ist das berüchtigte und von jedem Gleitschirmpiloten gefürchtete Einklappen, bei dem eine Flügelseite nach unten klappt und sich in Flugrichtung auf der Unterseite des Schirms anlegt.

Generell ist das Einklapprisiko umso größer:
- je stärker die Turbulenzen, da größere Kräfte auf die Kalotte wirken.
- je größer die Spannweite, da die Wahrscheinlichkeit steigt, daß gegensätzliche Luftströmungen den Schirm erfassen.
- je größer die Flügelstreckung, da bereits kleine Kräfte zum Einklappen führen.

Gleitschirme mit teilweise geschlossener Anströmkante werden wegen der in Turbulenzen großen Einklappgefahr ebenso als gefährlich eingestuft, wie Gleitschirme mit zu großer Spannweite, oder zu großer Flügelstreckung.

### Lösung der Aufgabe

Eine effektive Leistungssteigerung über die Vergrößerung von Spannweite und Flügelstreckung scheitert bei den heute üblichen Bauweisen, will man die Grenzen der Flugsicherheit nicht überschreiten.

Hier will die Erfindung Abhilfe schaffen.

Die Erfindung, wie sie in den Ansprüchen gekennzeichnet ist, löst die Aufgabe, eine wesentliche Leistungssteigerung herbei zu führen, ohne daß dabei gleichzeitig eine Beeinträchtigung von Flugstabilität und Flugsicherheit in Kauf genommen werden muß.

### Vorteile der Erfindung

Ein im Sinne der Erfindung ausgeführter Tragflügel bringt bereits bei gleicher Spannweite wesentlich mehr Auftrieb, als Tragflügel, wie sie heute Verwendung finden.

Dies, und der zusätzlich erzielbare Mehrauftrieb durch die Möglichkeit eine Vergrößerung von Spannweite und Flügelstreckung der Unterflügel über die heutigen Grenzen hinaus vorzunehmen, sind die mit der Erfindung erzielten Hauptvorteile.

Sie können dazu genutzt werden, leistungsfähigere Gleit- und Fallschirme zu bauen, oder schwerere Gegenstände als nur das Gewicht von einem oder zwei Menschen in die Luft zu tragen.

Die Erfindung kann, am zu tragenden Objekt die Anbringung einer Luftschraube und eine geeignete Aufaufhängung am Tragegurt vorausgesetzt, gewöhnliche Verkehrsmittel, wie z.B. Autos, Motorräder, Motorboote und andere, für wenig Geld in Flugzeuge verwandeln.

Weitere erreichte Vorteile sind die positiven Auswirkungen der Erfindung auf die Flugsicherheit. Ist bei heutigen Konstruktionen eine Leistungssteigerung fast immer mit einer Beeinträchtigung dieser verbunden, erlaubt die in der Erfindung eingeführte Anordnung eine Aufgabenteilung.

Der Oberflügel stabilisiert nicht nur die beiden auf maximale Leistung ausgelegten Unterflügel. Er erfüllt die wichtige und speziell ihm zugeteilte Zusatzaufgabe, die Sicherheit des Flugsystems zu erhöhen.

Zur Verbesserung des Einklapp- und Wiederöffnungsverhaltens, dem wichtigsten Kriterium, ist die Spannweite des Oberflügels der Konstruktion kleiner gehalten als bei üblichen Gleitschirmen. Die Eintrittsöffnungen für die anströmende Stauluft wurden im Laufe der Entwicklungsgeschichte des Gleitschirms vorwiegend zur Verbesserung des Luftwiderstands immer weiter verkleinert und von der Vorderkante der Gleitschirmkappe an die Unterseite verlegt. Die beschriebene 3-fach Anordnung bietet den Vorteil, daß auf diese die Sicherheit destabilisierende Maßnahme zumindest beim Oberflügel verzichtet werden kann. Die Eintrittsöffnungen des Oberflügels liegen unmittelbar an der Anströmkante der Kappe, während sie bei den Unterflügeln wie bei modernen Gleitschirmen an den Unterseiten angebracht sind. Kommt es dennoch zum Einklappen einer Flügelseite, Klappt der Oberflügel, da Kleiner als ein herkömmlicher Gleitschirmflügel, auf weniger Länge ein.

Er öffnet dadurch viel schneller wieder und zieht den oder die eingeklappten Unterflügel mit hoch.

Die Sackfluggeschwindigkeit, der senkrechte Sturz infolge zu geringer Geschwindigkeit, der bei herkömmlichen Gleitschirmen nur durch den Luftwiderstand des Schirms gebremst wird, ist ebenfalls geringer.

Das neue System garantiert, daß selbst bei einer Vorwärtsgeschwindigkeit Null der hintere der beiden unteren Tragflügel umströmt wird. Die beim Sturz nun von unten kommende Anströmluft strömt zwangsweise durch den Düsenspalt um den Hinterflügel, wo infolgedessen Auftrieb erzeugt wird.

Schließlich und endlich ist die Flugbahn eines Flugobjekts mit der neuen Tragflächenanordnung sogar in starken Turbulenzen aüßerst stabil.

Die in Turbulenzen durch Windscherung herbeigeführte Beschleunigung der Kalotte kann bei Vorliegen ungünstiger Verhältnisse für einen Gleitschirmpiloten zur tödlichen Gefahr werden. Nämlich dann, wenn der Schirm wegen seiner geringen Massenträgheit in Sekundenbruchteilen unter den Piloten gerissen wird. In so einem als "Überschlagen" bezeichneten Vorgang bleibt beim heutigen Stand der Entwicklung nur die Hoffnung, daß Schirm und Pilot sich nirgends verheddern oder, daß man einen Rettungsschirm dabei hat. Mit der neuen Tragflügelanordnung wird diese Gefahr vermindert. Fliegt man mit ihr durch einen Rotor, reißt der Auftrieb nicht schlagartig, sondern zeitlich versetzt erst am vorderen Unterflügel, dann am Oberflügel und zuletzt am hinteren Unterflügel ab. In der Zeit bis zum völligen Zusammenbruch des Auftriebs, die jetzt um Sekundenbruchteile länger dauert als bei herkömmlichen Gleitschirmen, hat das Flugobjekt Gelegenheit der Kalotte nach unten auszuweichen. Das Ergebnis ist eine relativ stabile Flugbahn ohne Überschlag.

### Ausführungsweg

Im folgenden wird die Erfindung anhand von lediglich einen Ausführungsweg darstellenden Zeichnungen näher erläutert.

### Es zeigt

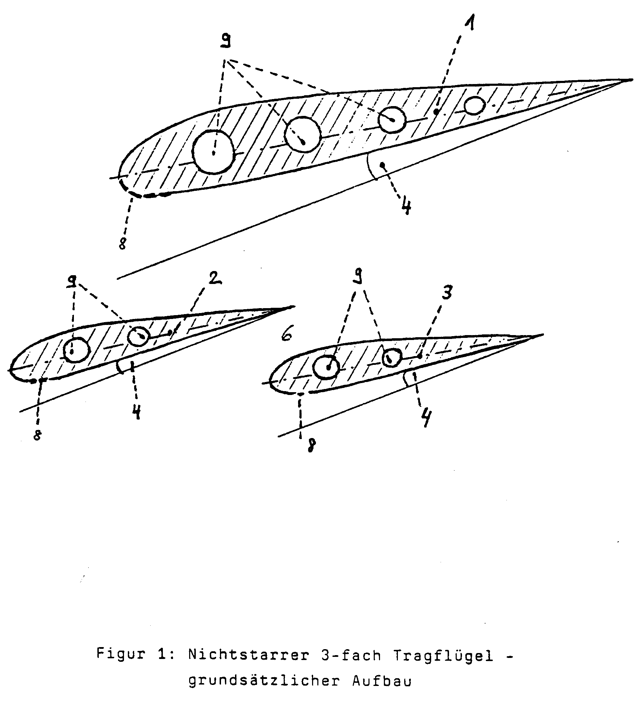

Figur 1 eine im Sinne der Erfindung ausgeführte 3-fach Tragflügelanordnung. Dargestellt ist in dieser Schnittzeichnung der grundsätzliche Aufbau der Einzeltragflügel und ihre gegenseitige Lage. Als weitere Details sind die Eintrittsöffnungen (8), die Überströmlöcher (9) und die unterschiedlichen Anstellwinkel (4) zu sehen.

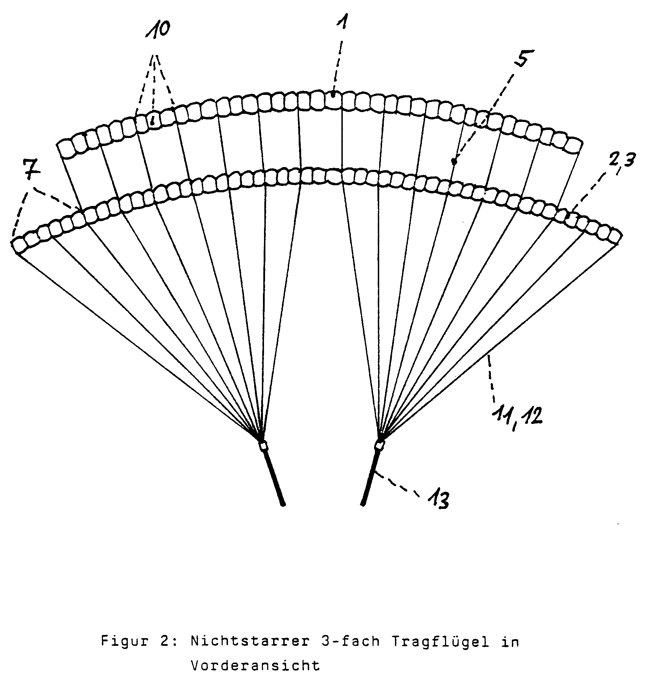

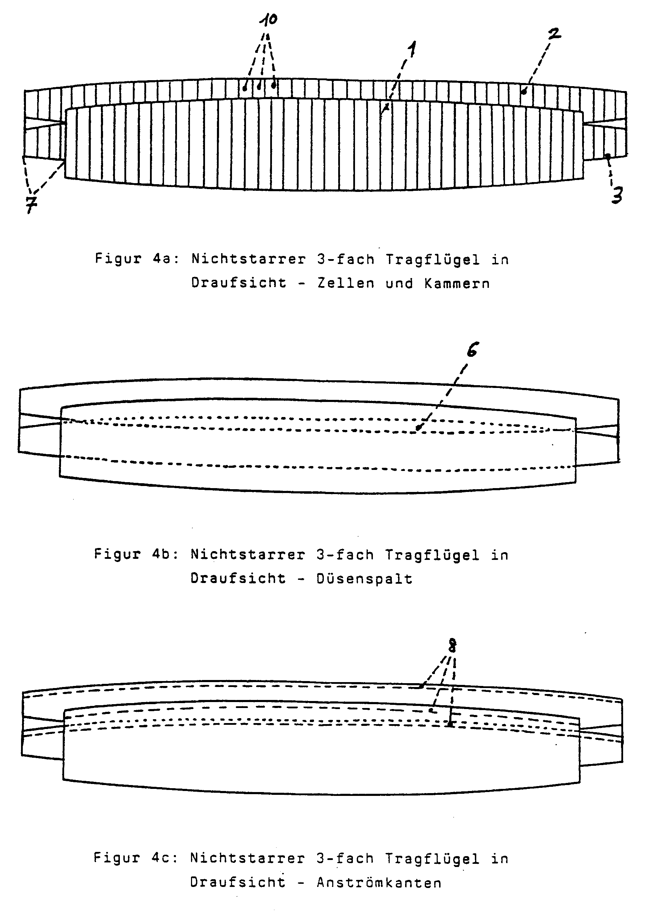

Die Figuren 2 bis 4 zeigen dieselbe Anordnung aus unterschiedlicher Sicht. Figur 2 zeigt die Vorderansicht mit Oberflügel (1), vorderen Unterflügel (2), der hintere Unterflügel (3) ist aus dieser Sicht verdeckt, Fangleinen (11,12) und Tragegurt (13).

Figur 3 zeigt einen Schnitt durch die Symetrieachse mit Oberflügel (1), vorderen Unterflügel (2), hinteren Unterflügel (3), Verbindungsleinen zwischen Oberflügel und Unterflügeln (5), vordere Fangleinengruppe (11), hintere Fangleinengruppe (12), Steuerleine (14) und Tragegurt (13).

Figur 4 zeigt die Draufsicht der Anordnung. Zu sehen sind in Figur 4a die Zellen und Kammern (10), in Figur 4b der Düsenspalt (6) und in Figur 4c die Eintrittskanten (8).

Weiter ist in dieser Zeichnung eine elliptische Form aller Flügel zu erkennen, die deshalb gewählt wurde, um zu gewährleisten, daß die beiden Unterflügel im Randbereich (7), wo keine Stabilisierung durch den Oberflügel mehr erfolgt, nicht überlappen. Eine elliptische Form ist jedoch nicht zwingend erforderlich, das System wäre auch mit trapez- oder rechteckigen Flügel funktionsfähig.

Durchgehende Stabilisatoren sorgen zusätzlich für Stabilität im Randbereich.

In den genannten Figuren ist eine Tragflügelanordnung aus flexiblem Material dargestellt, deren Formstabilität durch die anströmende Stauluft gewährleistet wird und deren beschriebene Vorteile durch die spezielle 3-fach Anordnung erreicht werden.

Erfindungsgemäß ist eine Aufgabenteilung eingeführt. Die beiden unteren Tragflügel (2) und (3) wirken wie ein Tandem-Flügel und geben dem System seine überaus große Leistungsfähigkeit.

Tandem-Flügel verhalten sich in einer Strömung besonders günstig, wenn der Abstand zwischen den beiden Flügeln stark verringert, sowie der hintere Flügel leicht nach unten oder nach oben versetzt wird. Auf diese Weise entsteht zwischen den beiden Flügeln ein Düsenspalt, wie man ihn aus der Flugzeugtechnik von Vorflügel gewohnt ist. In diesem Düsenspalt (6) bildet sich ein Gebiet großer Geschwindigkeit aus, was eine Vergrößerung des Unterdrucks auf den Flügeloberseiten bewirkt.

Der Hinterflügel (3) ist etwas stärker angestellt, weil er im Abwind des Vorderflügels (2) fliegt. Bei technischen Ausführungen ist es auch möglich, den Unterflügel aus mehrere Einzelflügel zusammenzusetzen, wobei der Zwischenraum zwischen zwei hintereinander angeordneten Flügeln jeweils einen eigenen Düsenspalt formt.

Die Tandemanordnung ist jedoch besonders vorteilhaft, weil bei ihr der Gesamtauftrieb größer ist, als die Einzelauftriebe der beiden Teilflügel ohne die gegenseitige Beeinflussung. Weiter weist eine solche Anordnung bei C_{A MAX} einen relativ flachen Polarenverlauf auf. Dies bedeutet, daß die Strömung nicht plötzlich, sondern allmählich abreißt. Das System ist somit gegen Übersteuern weitgehend unempfindlich.

Der obere Tragflügel (1) hat die Aufgabe die untere Tandemanordnung zu fixieren. Das Problem der Instabilität eines nichtstarren Tandemflügels, der flattern, ausbrechen oder pendeln würde, wäre ohne diesen stabilisierend wirkenden Oberflügel nicht zu lösen. Er fixiert die Lage der beiden unteren Tragflügel und damit Form und Abstand des Düsenspalts durch Zug nach oben.

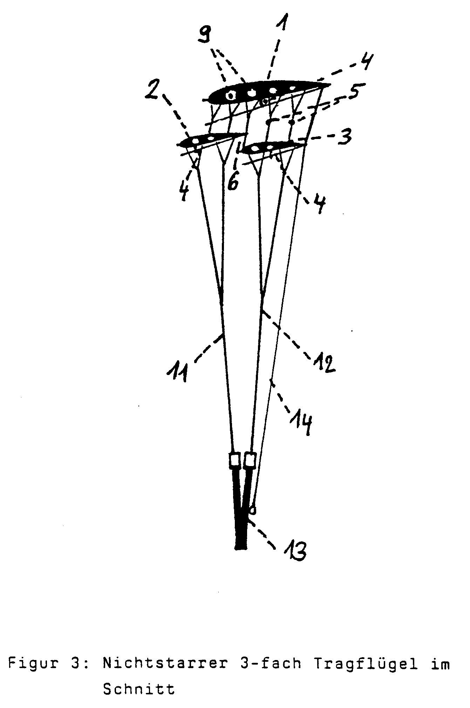

Eine Leinenreihe der Verbindung Oberflügel/Unterflügel (5) ist hierzu sowohl mit dem Oberflügel, als auch mit beiden Unterflügeln verbunden. (Figur 3)
Zusätzlich ist der Oberflügel ebenfalls etwas stärker angestellt als der vordere Unterflügel und so befestigt, daß eine übermäßige Profildeformierung, wie sie infolge von Scherkräften auftreten kann, vermieden wird.

Damit erfüllt der Oberflügel eine weitere sehr wesentliche Aufgabe. Ergibt dem System seine Sicherheit.

## Patentansprüche

1. Nichtstarrer Mehrfach-Tragflügel (1, 2, 3, ...) für Gleitschirme, Autos, Motorräder, Motorboote und andere bisher bodengebundene Verkehrsmittel, dessen Formstabilität durch die anströmende Stauluft bewirkt wird und wobei das zu tragende Objekt an Fangleinen (11, 12) aufgehängt ist, dadurch gekennzeichnet, daß die Flügel in der Strömung eine feste Einheit bilden, aus einem Oberflügel (1) und wenigstens zwei Unterflügel (2, 3) bestehen, deren gegenseitige Lage durch die anströmende Luft und den daraus resultierenden Kräften mittels Verbindungsleinen (5) fixiert ist, eine Aufgabenteilung zwischen Oberflügel und Unterflügel eingeführt ist, wobei zur Erhöhung der Flugsicherheit die Spannweite des Oberflügels relativ Klein ist und am Oberflügel die Eintrittsöffnungen für die anströmende Stauluft unmittelbar an der Anströmkante liegen, die Unterflügel zur Erhöhung der Flugleistung eine relativ große Flügelstreckung und Spannweite aufweisen, zwei hintereinander liegende Unterflügel jeweils einen Tandemflügel mit einem dazwischen liegenden Düsenspalt (6) bilden, der zusätzlich auftriebssteigernd wirkt, und der Oberflügel (1) die Lage der Unterflügel (2,3) und damit Form und Abstand des jeweiligen Düsenspalts (6) fixiert.

## Claims

1. Non-rigid multiple wing (1, 2,, 3, ...) for paragliders, motor vehicles, motor cycles, speedboats and other hitherto earth-bound conveyances, which owes its dimensional stability to the incoming ram air, the supported object being suspended from grappling ropes (11, 12) and which is characterized by the fact that the wings form a fixed unit comprising a top wing (1) and at least two bottom wings (2, 3) in the air stream, the position of these wings relative to one another being maintained by connecting ropes (5) as defined by the incoming air and the resulting forces, the top and bottom wings fulfilling separate functions, the span of the top wing remaining relatively small in order to enhance the aerodynamical safety, the top wing featuring inlet openings for the incoming ram air directly in the leading edge while the bottom wings have a relatively large aspect ratio and span in order to enhance the flying performance, two bottom wings arranged one behind the other forming a tandem wing with a nozzle gap (6) in the middle providing additional lift, the top wing (1) determining the position of the bottom wings (2, 3) and thus the shape and size of the nozzle gap (6) in each case.

## Revendications

1. Une aile portante à plans multiples non rigide (1, 2, 3, ..) pour parapentes, voitures, motocycles, bateaux à moteur et autres moyens de transport se déplaçant au sol jusqu'à présent, dont l'indéformabilité est due à l'arrivée d'air sous pression dynamique, l'élément à porter étant accroché à des cordes de suspension (11, 12). Ceci est caractérisé par le fait que les ailes se trouvant dans le courant d'air forment une unité rigide comprenant une aile supérieure (1) et au moins deux ailes inférieures (2, 3) dont la position réciproque est fixée au moyen de cordes de liaison (5) par l'arrivée d'air et les forces qui en résultent, une répartition des tâches entre l'aile supérieure et les ailes inférieures et, pour augmenter la sécurité de vol l'envergure de l'aile supérieure est relativement faible et sur l'aile supérieure les ouvertures d'entrée d'air sous pression dynamique se trouvent juste sur le bord d'arrivée d'air, alors que les ailes inférieures présentent un allongement géométrique et une envergure relativement grands destinés à augmenter la performance de vol, les deux ailes inférieures se trouvant l'une derrière l'autre forment alors une aile tandem avec une fente à jet d'air intercalée (6) dont l'effet permet d'accroître la portance, et l'aile supérieure (1) fixe la position des ailes inférieures (2, 3) et, par là même, la forme et la distance de la fente à jet d'air (6).
